# EUROPEAN PATENT APPLICATION

(11) **EP 4 810 395 A1**
(43) Date of publication of application: **23.09.2026**
(21) Application number: 24891019.2
(22) Date of filing: 17.07.2024
(51) Int. Cl.: B65D 3/02, B65D 5/20

(54) **CURLED CONTAINER MADE OF FIBER MATERIAL**

(30) Priority: 16.11.2023 JP 2023194972
(71) Applicant: Tokan Kogyo Co., Ltd., Tokyo 141-0022 (JP)
(72) Inventor: MAGOME, Hirotaka, Tokyo 141-0022 (JP)
(74) Representative: Vossius & Partner Patentanwälte Rechtsanwälte mbB
(86) International application number: PCT/JP2024/025610
(87) International publication number: WO 2025/104975

(57) **Abstract**

[Object]

To provide a container with a curled rim which can assure sealing performance while also retaining an aesthetically pleasing appearance and forming readiness.

[Solving Means]

A container made of a fibrous material with a curled rim includes a bottom panel of a polygonal shape defined by a ruled line, a side wall portion configured by first side panels and second side panels that are each continuous with the bottom panel via the ruled line and inclined in such a manner as to flare from the ruled line to an opening rim, and a curled rim portion formed by an upper end of the side wall portion being rolled in a curl shape. The side wall portion has corner portions where the first side panels and the second side panels overlap at their both ends, at least one of the end faces of the first side panel and the second side panel that configure each corner portion is provided with a missing area, and one of the end faces of the first side panel and the second side panel forms the curled rim portion. One of the first side panel and the second side panel, the one panel being located on an outer side in the corner portion, is provided with a projecting portion to be included in the curled rim portion.

## Description

### [Technical Field]

The present invention relates to a container made of a fibrous material with a curled rim, which is formed from a fibrous material such as paper, for example.

### [Background Art]

As containers for holding, for example, foods and medical supplies, shallow dish-type trays and boxes and the like which include an opening open on the sides of upper surfaces are widely used. In recent years, there are increasing proposals for containers made of a fibrous material which are formed with a fibrous material, primarily paper, from the viewpoint of environmental protection and recycling.

A container made of a fibrous material can be used along with a lid member that can close an opening. Proposed as such containers made of a fibrous material include a structure that includes a top curl shape with an opening rim of the container rolled in a curl shape, as exemplified in PTL 1 and PTL 2, for example.

### [Citation List]

### [Patent Literature]

[PTL 1]
   JP 2011-212882A
[PTL 2]
   JP 2022-82965A

### [Summary]

### [Technical Problems]

In containers of conventional structures including the above-mentioned pieces of patent literature, a point to be still improved exists. Described specifically, the sealing performance with a lid body and the strength at the opening rim of the container can be surely improved by the inclusion of such a top curl shape as exemplified in the above-described pieces of patent literature.

When forming the above-described container in general, a side wall inclined to a container bottom surface (also called a "bottom panel") is formed by folding a sheet of blank along a ruled line. For a curl shape that is applied to an opening rim of the container at this time, not only sufficient sealing performance with the lid body but also an aesthetically pleasing appearance and forming readiness at the opening rim are earnestly desired.

In this respect, with the method proposed in PTL 1, many wrinkles are caused to occur in corner portions of the container, and is hence considered to spoil the aesthetics of the product. With the method proposed in PTL 2, meanwhile, a blank overlaps itself in curling processing applied, for example, to corner portions, so that the blank is difficult to be rolled into a curl shape. The method proposed in PTL 2 therefore has to be considered to still have a room for improvement in that a difficulty can arise in forming the container.

The present invention has been made in view of the above-described problems as examples, and has as an object thereof the provision of a bottomed container made of a fibrous material, primarily paper, with a curled rim, to which, for example, a seal lid or a cover lid can be attached and which can thoroughly assure sealing performance while retaining an aesthetically pleasing appearance and forming readiness.

### [Solution to Problems]

A container made of a fibrous material with a curled rim in an embodiment of the present invention is (1) a container made of a fibrous material with a curled rim, the container being open in an upper surface thereof and curled at an opening rim thereof. The container includes a bottom panel of a polygonal shape defined by a ruled line, a side wall portion configured by first side panels and second side panels that are each continuous with the bottom panel via the ruled line and inclined in such a manner as to flare from the ruled line to the opening rim, and a curled rim portion formed by an upper end of the side wall portion being rolled in a curl shape. The side wall portion has corner portions where the first side panels and the second side panels overlap at both ends thereof. At least one of end faces of the first side panel and the second side panel that configure each corner portion is provided with a missing area, and one of the end faces of the first side panel and the second side panel forms the curled rim portion. One of the first side panel and the second side panel, the one panel being located on an outer side in the corner portion, is provided with a projecting portion to be included in the curled rim portion.

Further, in the container made of the fibrous material with the curled rim as described above in (1), it is preferred that (2) the projecting portion be arranged around a center in an outer-rim side end face that defines the missing area.

Further, in the container made of the fibrous material with the curled rim as described above in (2), it is preferred that (3) a plurality of the projecting portions be intermittently arranged from the center toward ends of the missing area.

Further, in the container made of the fibrous material with the curled rim as described above in (3), it is preferred that (4) a width of the projecting portion located at the center in the missing area be equal to or greater than those of the projecting portions located on sides of the ends.

Further, in the container made of the fibrous material with the curled rim as described above in any one of (1) to (4), it is preferred that (5) the bottom panel be defined by the ruled line that is rectangular and the projecting portion be arranged corresponding to the corner portion located at each of four corners of the bottom panel.

Further, in the container made of the fibrous material with the curled rim as described above in any one of (1) to (4), it is preferred that (6) a height from the outer-rim side end face in the projecting portion be set to a magnitude that the projecting portion is included in the missing area.

Further, in the container made of the fibrous material with the curled rim as described above in (1), it is preferred that (7) one of the end faces of the first side panel and the second side panel be provided with the missing area and the panel provided with the missing area be located on the outer side in the corner portion.

### [Advantageous Effect of Invention]

According to the container made of the fibrous material with the curled rim in the present invention, the sealing performance at the side wall portion can be secured while also satisfying both strength and forming readiness at the curled rim portion owing to the formation of the side wall by the shorter side panels and the longer side panels in combination.

### [Brief Description of Drawing]

[FIG. 1]

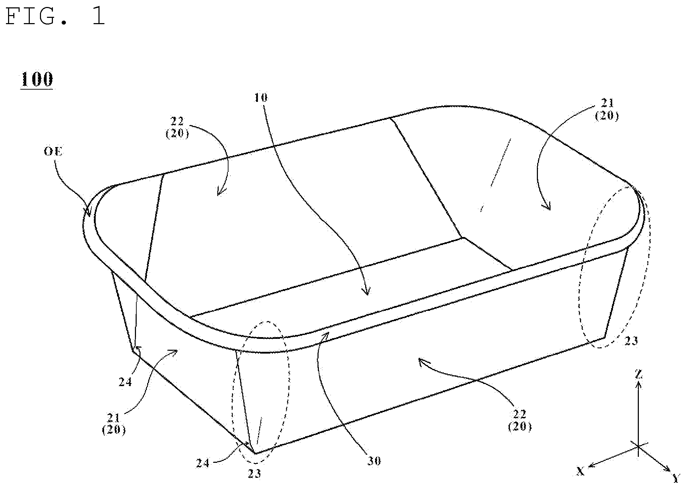

   FIG. 1 is a perspective view, as seen from diagonally above, of a container made of a fibrous material with a curled rim according to an embodiment.
[FIG. 2]

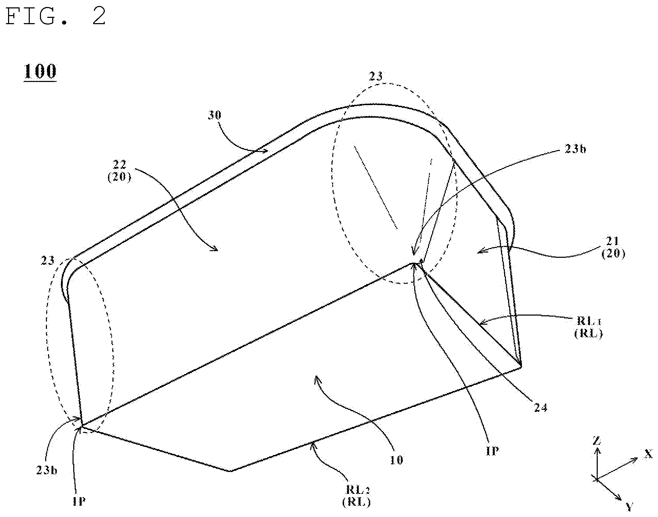

   FIG. 2 is a perspective view, as seen from diagonally below, of the container made of the fibrous material with the curled rim according to the embodiment.
[FIG. 3]

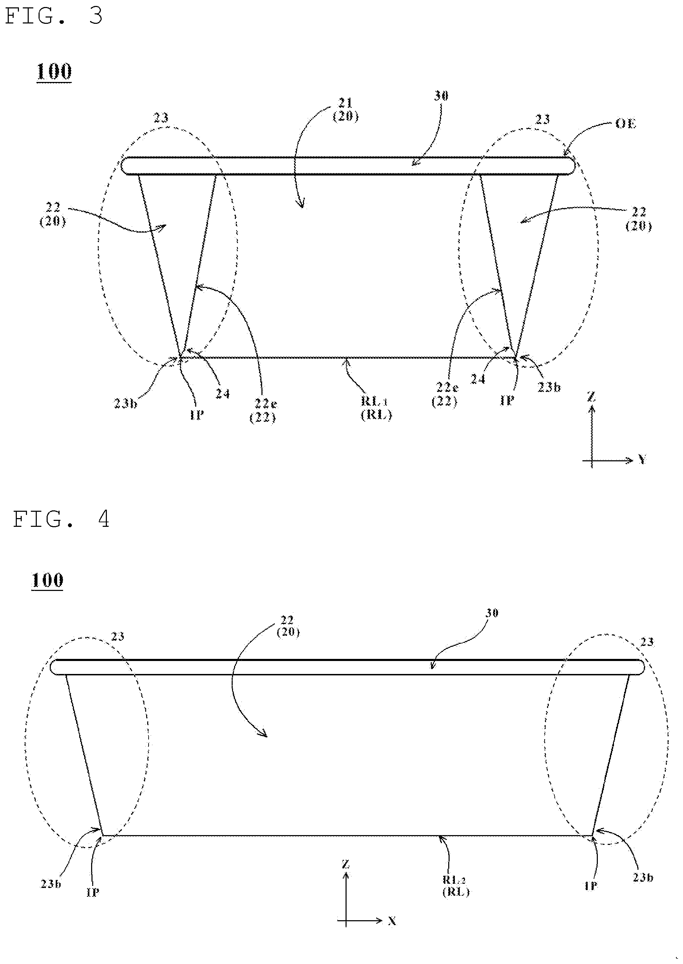

   FIG. 3 is a side view, as seen from a side of a shorter side panel, of the container made of the fibrous material with the curled rim according to the embodiment.
[FIG. 4]
   FIG. 4 is a side view, as seen from a side of a longer side panel, of the container made of the fibrous material with the curled rim according to the embodiment.
[FIG. 5]

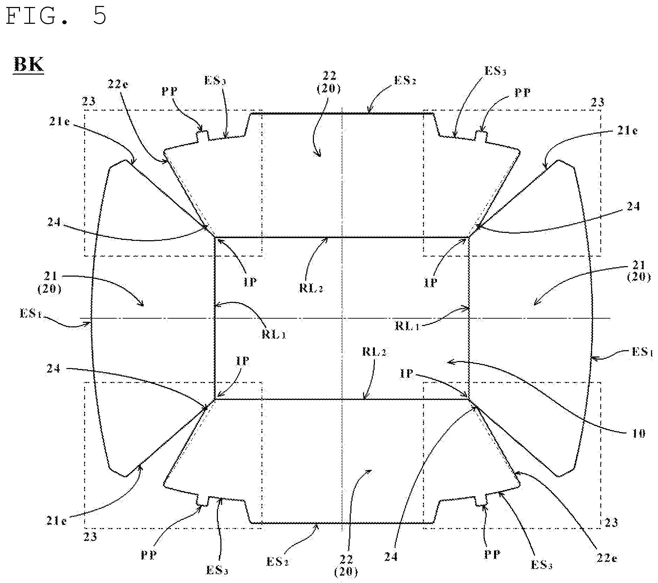

   FIG. 5 is a schematic view depicting a blank for the container made of the fibrous material with the curled rim according to the embodiment.
[FIG. 6]

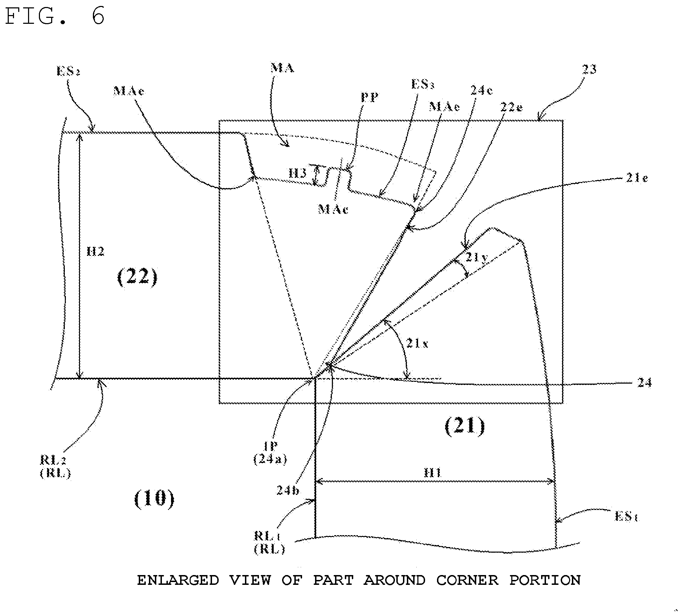

   FIG. 6 is a schematic view depicting, on an enlarged scale, a part around a corner portion of the blank for the container made of the fibrous material with the curled rim according to the embodiment.
[FIG. 7]

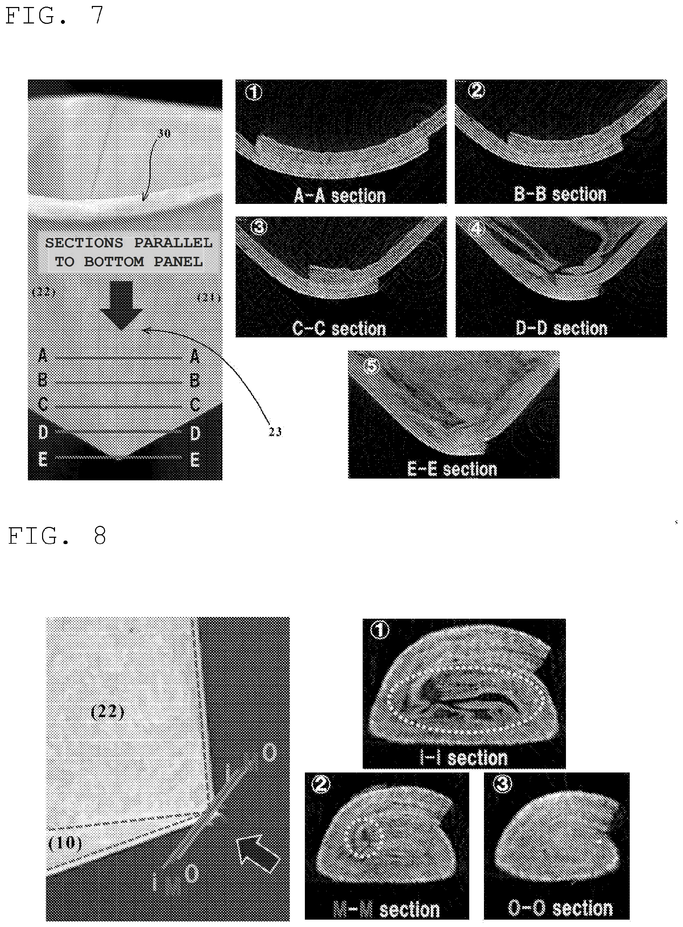

   FIG. 7 presents schematic views depicting the states of sections at different predetermined heights from a bottom panel in a corner bottom of the container made of the fibrous material with the curled rim according to the embodiment.
[FIG. 8]
   FIG. 8 presents schematic views respectively depicting the states of sections in the corner bottom of the container made of the fibrous material with the curled rim according to the embodiment.
[FIG. 9]

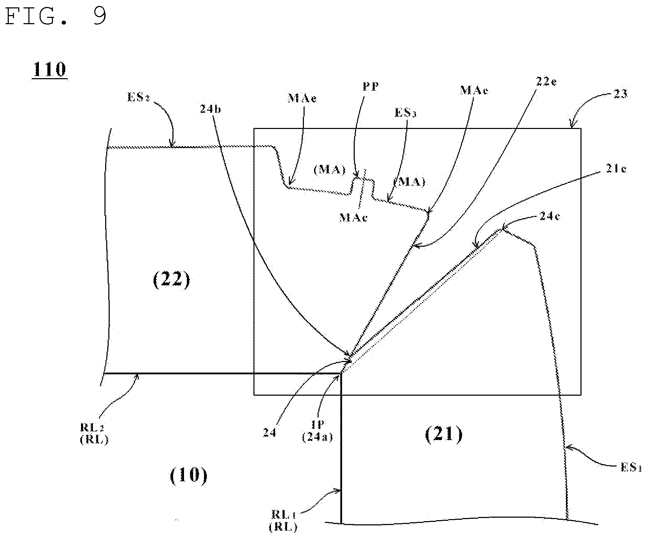

   FIG. 9 is a schematic view depicting an essential part of a container made of a fibrous material with a curled rim according to Modification 1.
[FIG. 10]

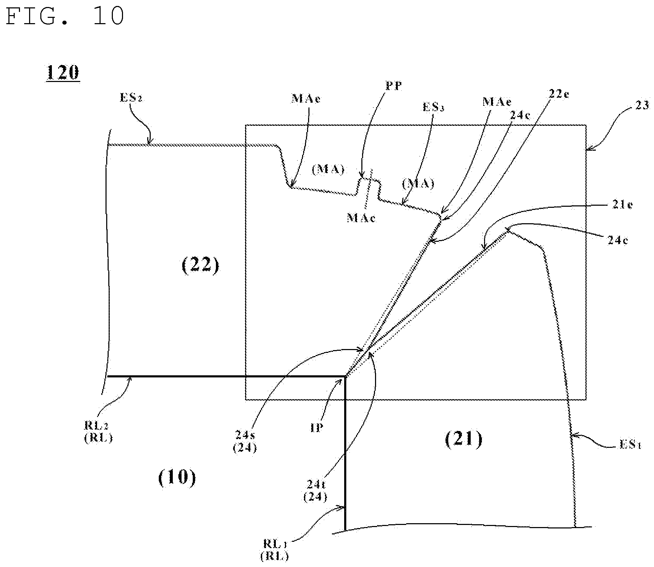

   FIG. 10 is a schematic view depicting an essential part of a container made of a fibrous material with a curled rim according to Modification 2.
[FIG. 11]

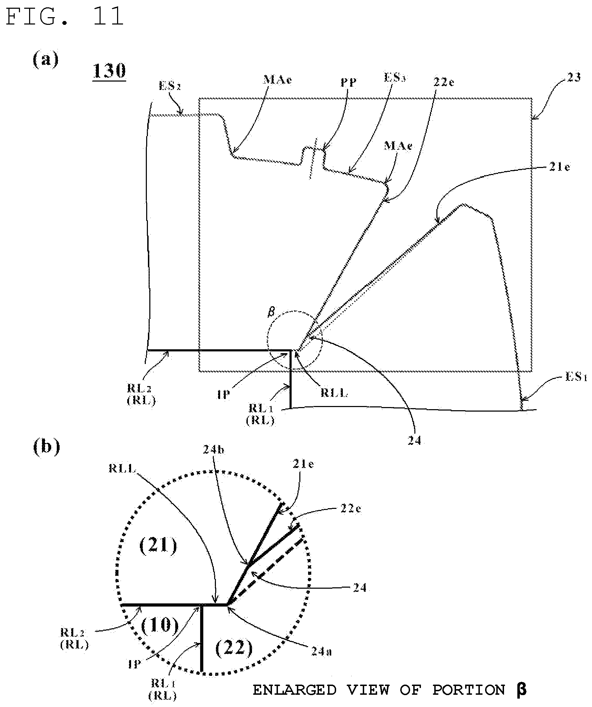

   FIG. 11 presents schematic views each depicting an essential part of a container made of a fibrous material with a curled rim according to Modification 3.
[FIG. 12]

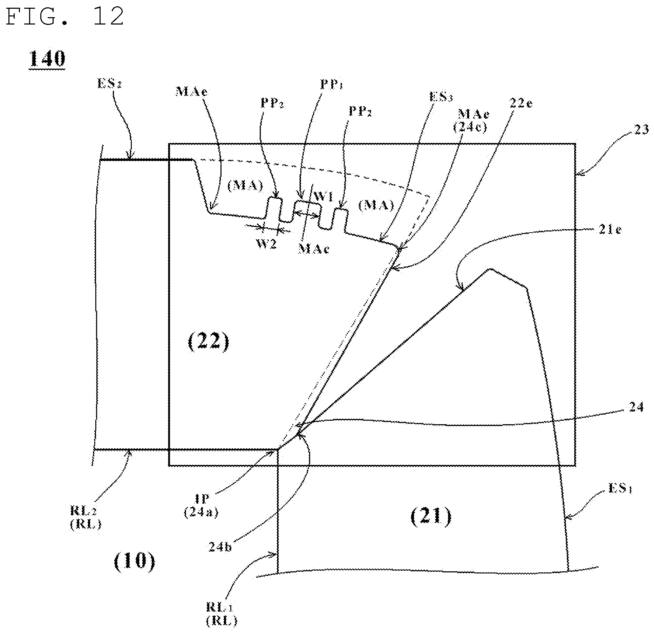

   FIG. 12 is a schematic view depicting an essential part of a container made of a fibrous material with a curled rim according to Modification 4.

### [Description of Embodiment]

With reference to figures as appropriate, a description will hereinafter be specifically made with regard to a container made of a fibrous material with a curled rim according to this embodiment. It is to be noted that the following embodiment illustrates an example to which the present invention has been applied, does not restrict the present invention without intention, and may be practiced by appropriately complementing any other known configuration including those of the above-described patent literature. Further, for the sake of convenience of illustration, a height direction of a container 100 made of a fibrous material with a curled rim in a state that a bottom panel 10 is placed with an opening directed upward in a vertical direction, a direction in which longer ruled lines RL₂ extend, and a direction in which shorter ruled lines RL₁ extend will hereinafter be set to a Z direction, an X direction, and a Y direction, respectively.

### [Container made of fibrous material with curled rim]

With reference to FIGS. 1 to 4 and other figures, a description will be made with regard to the container 100 made of the fibrous material with the curled rim in this embodiment. As depicted in these figures, the container 100 made of the fibrous material with the curled rim of this embodiment is, for example, a bottomed container that is made primarily of paper, open in an upper surface, and curled at an opening rim OE.

The expression "made primarily of paper" as used herein means a manufacturing method of performing formation, for example, with use of known paper made from a fibrous material or with use of a composite material of a fibrous material as a base with resin formed by, for example, the paper being coated at its inner surface and outer surface with a known resin material (for example, polyethylene or the like).

Here, the container 100 made of the fibrous material with the curled rim has a paper thickness of preferably 225 to 555 µm, with 310 µm or greater but 555 µm or smaller being more preferred from the viewpoint of leakage suppression. In addition, the container 100 made of the fibrous material with the curled rim has a paper density of preferably 0.55 to 0.85 g/cm³, with 0.55 g/cm³ or higher but 0.70 g/cm³ or lower being more preferred.

In the container 100 made of the fibrous material with the curled rim, a known resin material (for example, low-density polyethylene (LDPE) or the like) may be laminated on a base paper having the above-described paper thickness and paper density, for example, on its inner side that will become an inner surface of the container. As a further alternative, the container 100 made of the fibrous material with the curled rim of this embodiment may be in a form that the known resin material is laminated on both an inner surface and an outer surface of the base paper.

Further, the container 100 made of the fibrous material with the curled rim of this embodiment can be covered, for example, at the opening rim OE by a known cover lid or sheet-shaped lid, for example. As an example, the cover lid may be a known lid body of, for example, heat-resistant OPS (biaxially oriented polystyrene), amorphous polyethylene terephthalate resin, polystyrene, polypropylene, or the like. It is to be noted that the container 100 made of the fibrous material with the curled rim can be filled with known contents such as food containing a soup or seasoning, for example.

Described more specifically, the container 100 made of the fibrous material with the curled rim of this embodiment includes the bottom panel 10, a side wall portion 20, and a curled rim portion 30 as depicted in FIGS. 1 to 4 and other figures.

The bottom panel 10 is a polygonal part defined by a ruled line RL. As understood from FIGS. 1 and 2, the bottom panel 10 in this embodiment is preferably, for example, in a rectangular shape including the shorter ruled lines RL₁ in a pair and the longer ruled lines RL₂ in a pair. In other words, the bottom panel 10 in this embodiment may be defined by the ruled line RL that is rectangular.

It is to be noted that, although the rectangular bottom panel 10 is exemplified in this embodiment, the present invention is not limited to this shape, and the bottom panel 10 may be in various kinds of polygonal shapes other than a rectangle, such as a triangle and a pentagon in addition to a horizontally long octagon with chamfered corners, for example, insofar as the container 100 is covered by a lid body such as the above-described cover lid or sheet-shaped lid.

The side wall portion 20 is configured by first side panels 21 (shorter side panels in this example) and second side panels 22 (longer side panels in this example) that are each continuous with the bottom panel 10 via the ruled line RL.

As depicted in FIG. 3 and other figures, the first side panels 21 and the second side panels 22 are configured to permit impartation of an inclination thereto by each being folded from the bottom panel 10 over the ruled line. As the bottom panel 10 is rectangular in this example, the first side panels 21 and the second side panels 22 are those which protrude from the bottom panel 10 in such a manner as to intersect with each other at the stage of a blank. It is to be noted that the first side panels 21 and the second side panels 22 may be of a shape having the same width (the length in a direction parallel to the corresponding ruled line) and the same height (corresponding to H1 and H2 in FIG. 6), or may be of a shape with one of the widths being longer than the other. A description will hereinafter be made assuming that, as described above, the first side panels 21 are shorter side panels having a relatively small width compared with the second side panels 22 and the second side panels are longer side panels having a relatively large width.

Described more specifically, each shorter side panel 21 in this embodiment is concatenated with the bottom panel 10 via the shorter ruled line RL₁, which corresponds to a first ruled line, as a boundary as depicted in FIG. 3. Meanwhile, each longer side panel 22 in this embodiment is concatenated with the bottom panel 10 via the longer ruled line RL₂, which corresponds to a second ruled line, as a boundary as depicted in FIG. 4.

As described above, the ruled line RL in this embodiment includes the shorter ruled lines RL₁, which define the bottom panel 10 and the shorter side panels 21, and the longer ruled lines RL₂, which define the bottom panel 10 and the longer side panels 22. It is to be noted that, as understood from FIGS. 5 and 6, the height H1 of each shorter side panel 21 (the distance from each shorter ruled line RL₁ to an outer end face ES₁) and the height H2 of each longer side panel 22 (the length from each longer ruled line RL₂ to an outer end face ES₂) may be specified to have substantially the same distance.

In addition, as understood from FIG. 1 and other figures, each side wall portion 20 in this embodiment is concatenated with the bottom panel 10 with such an inclination as to flare from the ruled line RL to the opening rim OE. In other words, the area of an opening at the opening rim OE and the area of a lid body are greater than the area of the bottom panel 10 in the container 100 made of the fibrous material with the curled rim of this embodiment.

### <Side panel flap portions corresponding to corner bottoms>

As understood from FIGS. 1, 2, and 5 and other figures, the side wall portion 20 has corner portions 23 in each of which the shorter side panel 21 and the longer side panel 22 overlap at both end portions. Further, on at least one of end faces of the shorter side panel 21 and the longer side panel that configure the corner portion 23, there is formed a side panel flap portion 24 that is arranged adjacent to the ruled line RL of the bottom panel RL (specifically, adjacent to an intersection point IP between the shorter ruled line RL₁ and the longer ruled line RL₂) and extends toward the other of the end faces of the shorter side panel 21 and the longer side panel 22.

The container 100 made of the fibrous material with the curled rim of this embodiment includes these side panel flap portions 24 adjacent to the intersection points IP, so that, upon assembling from a blank BK (see FIG. 5) into the container, the paper material is compacted in corner bottoms 23b located at four corners of the container, thereby making it possible to suppress occurrence of interstices in the corner bottoms 23b and leakage of the contents during use of the container.

It is to be noted that the side panel flap portions 24 are arranged preferably corresponding to the respective corner bottoms 23b at the corner portions 23 included in the container 100 made of the fibrous material with the curled rim. As the bottom panel 10 of the container 100 made of the fibrous material with the curled rim of this embodiment is rectangular, the side panel flap portions 24 in this embodiment are respectively arranged in the corner portions 23 located in the four corners of the bottom panel 10. In other words, if the bottom panel 10 is in a polygonal shape other than a rectangle, the side panel flap portions 24 will be arranged in a number other than four corresponding to the number of corners.

As depicted in FIGS. 1, 2, and 6 and other figures, each side panel flap portion 24 in this embodiment is formed on an end portion 22e of the longer side panel 22, and the side panel flap portion 24 overlaps the outer surface of the shorter side panel 21 and is fixedly secured with it via a known adhesive or the like. Described more specifically, as depicted in FIG. 6, each side panel flap portion 24 in this embodiment is a triangular part including a base point 24a approximately coinciding with the intersection point IP, a vertex 24b that, at the stage of the blank, is a separation point where the side panel flap portion 24 separates from the shorter side panel 21, and an outer end point 24c farthest from the intersection point IP in the end portion 22e of the longer side panel 22.

It is to be note that the present invention is not limited to this fashion, and, as will be mentioned later, the side panel flap portion 24 may be in a fashion that the side panel flap portion 24 is formed on an end portion 21e of the shorter side panel 21 and the side panel flap portion 24 overlaps the outer surface of the longer side panel 22 and is fixedly secured with it.

As also understood from the same figures, the side wall portion 20 is provided with no ruled line RL as creases, and, in each corner portion 23, the shorter side panel 21 and the longer side panel 22 are fixedly secured together via a known adhesive in such a manner as to overlap each other at at least parts thereof. That is, in the container 100 made of the fibrous material with the curled rim of this embodiment, there is no ruled line RL as creases on the side wall portion 20, so that an aesthetically pleasing external appearance is achieved, and, in addition, wrinkles are less likely to occur on a side of an inner surface, thereby making it possible to suppress leakage of the contents due to a capillary phenomenon that would otherwise be caused by such wrinkles.

Further, as the side wall portion 20 is provided with no ruled line RL in this embodiment, the degree of the inclination of the side wall portion 20 to the bottom panel 10 can be set to a desired angle by adjusting the overlap between each shorter side panel 21 and its corresponding longer side panel 22. If the overlap between the shorter side panel 21 and the longer side panel 22 is set great, for example, the degree of the inclination of the side wall portion 20 to the bottom panel 10 increases, so that the side wall becomes a steep inclined surface extending upward from a bottom surface. If this overlap is set small, on the contrary, the degree of the inclination decreases, so that the side wall becomes a gentle inclined surface.

The curled rim portion 30 is a part formed by an upper end of the side wall portion 20(the shorter side panels 21 and the longer side panels 22) being rolled in a curl shape. It is to be noted that, as a specific shape of the curled rim portion 30, no particular limitation is imposed insofar as a top curl can be formed, and a known top curl shape exemplified, for example, in JP 2022-82965A or the like can be applied. Such a curled rim portion 30 can be formed using a known forming machine that can form an opening portion of a container into a curl shape.

### <Reinforcement and improvements in formability at curled rim portion>

In the curled rim portion 30, as depicted in FIGS. 5 and 6, one of the end faces (outer-rim side end faces) of the shorter side panel 21 and the longer side panel 22 that configure this corner portion 23 is provided with a missing area MA, and the other of the end faces of the shorter side panel 21 and the longer side panel 22, the other end face corresponding to the missing area MA (in other words, overlapping the missing area at the stage of forming), forms the curled rim portion 30.

It is to be noted that, although the missing area MA is arranged in one of the shorter side panel 21 and the longer side panel 22 in this embodiment, missing areas MA may be arranged in both the shorter side panel 21 and the longer side panel 22 such that one of the missing areas MA supplements the other. In other words, in this embodiment, at least one of the end faces of the shorter side panel 21 and the longer side panel 22 that configure the corner portion 23 may be provided with the missing area MA, and the other of the end faces of the shorter side panel 21 and the longer side panel 22 may form the curled rim portion 30. Further, if one of the shorter side panel 21 and the longer side panel 22 is provided with the missing area MA, the panel provided with the missing area MA (the longer side panel 22 in this example) is positioned in the corner portion 23 preferably on an outer side (on a side of the outer surface) of the container, from the viewpoint of the aesthetics of the container and rim face penetration of the contents, for example.

As exemplified in FIG. 6 and other figures, the missing area MA is defined as an area formed at a part in the upper end of the side wall portion 20 where, at the time of formation from the blank BK into the container, the areas of end portions of the shorter side panel 21 and the longer side panel 22 overlap in a radial direction to form the curled rim portion 30.

It is to be noted that the extent to which the end portions of the shorter side panel 21 and the longer side panel 22 in each corner portion 23 overlap in the radial direction (an overlap area 21x of the shorter side panel 21 is exemplified as an example in FIG. 6) can appropriately be specified, for example, according to the degree of the inclination of the side wall portion 20 to the bottom panel 10, the size of a buffer 21y protruding from the missing area MA to avoid formation of a step at the curled rim portion 30, or the like.

Described more specifically, the curled rim portion 30 in this embodiment is provided with the missing part MA in the end portion 22e of the longer side panel 22 that configures the corner portion 23, and the upper end of the shorter side panel 21 corresponding to the part which overlaps the missing area MA is configured to form the curled rim portion 30. Owing to the inclusion of the curled rim portion 30 in the corner portion 23 in the container 100 made of the fibrous material with the curled rim of this embodiment, the curled rim portion 30 can be formed in a more stable shape without needing any excessive load upon formation from the blank BK into the container.

Further, as depicted in FIGS. 5 and 6, it is preferred in the container 100 made of the fibrous material with the curled rim of this embodiment that a projecting portion PP to be included in the curled rim portion 30 upon the above-described formation be arranged on an outer-rim side end face ES₃ on the side of the one of the shorter side panel 21 and the longer side panel 22, the one side panel including the missing area MA. At this time, the projecting portion PP is desirably arranged near a center MAc in the missing area MA. In addition, a height H3 (see FIG. 6) from the outer-rim side end face ES₃ in the projecting portion PP is preferably set to a magnitude that the projecting portion PP is included in the missing area MA. As described above, the projecting portion PP in this embodiment may be arranged around a center in the outer-rim side end face ES₃ that defines the missing area MA. As a consequence, the strength of the curled rim portion 30 is appropriately increased while retaining forming readiness, thereby making it possible to secure durability that can withstand, for example, even repeated attachment and detachment of the lid body.

Moreover, owing to the inclusion of the projecting portion PP to be included in the curled rim portion 30, the thickness of the curled rim portion 30 especially in each corner portion 23 can be secured. Described specifically, on the curled rim portion 30 in each corner portion 23, pulling actions can occur on the side of the longer side and on the side of the shorter side, respectively, and therefore, the curled rim portion 30 is prone to become thin (the diameter of the curl is prone to become small) especially at a central portion thereof. To cope with this, the projecting portion PP enters the curled rim portion 30 in each corner portion 23 as in this embodiment, so that a reduction in the diameter of the curl can be prevented by the projecting portion PP.

The states of sections at different predetermined heights from the bottom panel 10 in each corner bottom 23b of the container 100 made of the fibrous material with the curled rim according to the embodiment are depicted in FIG. 7. As understood from the figure, a section near the corner bottom 23b in the corner portion 23 is taken along E-E, and sections taken at the different predetermined heights upward in the Z-direction from the section E-E are indicated as D-D, C-C, B-B, and A-A.

For example, in the section A-A located at an approximately intermediate height of the corner portion 23, it can be understood that an area which contains the end portion 21e of the shorter side panel 21 and an area which contains the end portion 22e of the longer side panel 22 overlap. As the blank BK depicted in FIG. 5 is used in this embodiment, the area in which the shorter side panel 21 and the longer side panel 22 overlap become gradually smaller as the section shifts downward from the section A-A.

Meanwhile, in the section E-E depicting a part around the corner bottom 23b, it can be perceived that pores or the like are suppressed from occurring owing to compaction of the paper material near the corner bottom 23b by the above-described action of the side panel flap portion 24.

In addition, the states of some sections directed from an inside toward an outside in the corner bottom 23b of the container 100 made of the fibrous material with the curled rim according to the embodiment are depicted in FIG. 8. As understood from FIG. 8, in an i-i section near the corner bottom 23b and on an inner side where the contents are to be stored, the extent of compaction of the paper material is not so strong, and a pore is formed.

Meanwhile, in an M-M section shifted outward from the i-i section, the width of the above-described pore is significantly reduced, and, in an O-O section located on a further outside, complete closure of the pore can be understood.

As described above, in the container 100 made of the fibrous material with the curled rim of this embodiment, the upper end of one of the shorter side panel 21 and the longer side panel 22 that configure the corner portion 23 is formed into the curled rim portion 30 upon the formation, and the above-described missing area MA and projecting portion PP are included at the upper end of the other corresponding to the part of the curled rim portion 30. As a consequence, the curled rim portion 30 can be reinforced by the projecting portion PP, and the formability of the curl shape can be improved.

The above-described embodiment is an example of materialization of the spirit of the present invention, and changes may be made as appropriate within the scope not departing from the above-described spirit of the present invention. Moreover, modifications may also be made by adding known structures and methods as appropriate within the scope not departing from the above-described spirit of the present invention.

Suitable modifications to this embodiment will hereinafter be described. It is to be noted that, in the various modifications to be described hereinafter, constituent elements having the same functions and effects as those already mentioned in the above-described embodiment are identified by the same reference signs, and their description is omitted as appropriate.

### <Modification 1>

A container 110 made of a fibrous material with a curled rim according to Modification 1 is depicted in FIG. 9. In the container 100 made of the fibrous material with the curled rim according to the above-described embodiment, each side panel flap portion 24 is arranged on the end portion 22e of the longer side panel 22. In the container 110 made of the fibrous material with the curled rim according to Modification 1, on the other hand, the side panel flap portion 24 is arranged on the end portion 21e of the shorter side panel 21.

Described more specifically, as depicted in FIG. 9, the side panel flap portion 24 in Modification 1 is a triangular part including the base point 24a approximately coinciding with the intersection point IP, the vertex 24b that, at the stage of a blank, is a separation point where the side panel flap portion 24 separates from the longer side panel 22, and the outer end point 24c farthest from the intersection point IP in the end portion 21e of the shorter side panel 21.

With the above-described container 110 made of the fibrous material with the curled rim according to Modification 1, it is also possible to enjoy effects similar to those indicated in the above-described embodiment.

### <Modification 2>

A container 120 made of a fibrous material with a curled rim according to Modification 2 is depicted in FIG. 10. In the container 100 made of the fibrous material with the curled rim and the container 110 made of the fibrous material with the curled rim, which have been described above, each side panel flap portion 24 is formed on one of the shorter side panel 21 and the longer side panel 22. In the container 120 made of the fibrous material with the curled rim according to Modification 2, on the other hand, the side panel flap portions 24 are arranged on and along both the end portion 21e of the shorter side panel 21 and the end portion 22e of the longer side panel 22.

Described more specifically, as depicted in FIG. 10, the side panel flap portions 24 in Modification 2 are two line-symmetric triangular parts including the base point 24a approximately coinciding with the intersection point IP, a vertex 24s and a vertex 24t that, at the stage of a blank, are separation points where the side panel flap portions 24 separate from the longer side panel 22, and two outer end points 24c (the outer end point farthest from the intersection point IP in the end portion 21e of the shorter side panel 21 and the outer end point farthest from the intersection point IP in the end portion 22e of the longer side panel 22).

As described above, the side panel flap portion 24 in the present invention may be arranged on at least one of the end portion 21e of the shorter side panel 21 and the end portion 22e of the longer side panel 22. With the above-described container 120 made of the fibrous material with the curled rim according to Modification 2, it is also possible to enjoy effects similar to those indicated in the above-described embodiment and Modification 1. It is to be noted that the above-described two triangular shapes configuring the side panel flap portions 24 in Modification 2 may both have the same shape such that they have line symmetry, or may have shapes different from each other.

### <Modification 3>

A container 130 made of a fibrous material with a curled rim according to Modification 3 is depicted in FIG. 11(a). In the containers each made of the fibrous material and having the curled rim according to the above-described embodiment, Modification 1, and Modification 2, the base point 24a of each side panel flap portion 24 is arranged to approximately coincide with the intersection point IP. In the container 130 made of the fibrous material with the curled rim according to Modification 3, on the other hand, the intersection point IP between the shorter ruled line RL₁ and the longer ruled line RL₂ and the base point 24a do not coincide, and the base point 24a is arranged at a position close to the intersection point IP.

Described more specifically, as depicted in FIG. 11(b), the longer ruled line RL₂ in Modification 3 has an extension line RLL that extends from the intersection point IP with the shorter ruled line RL₁ in each corner portion 23. Further, in each side panel flap portion 24 in Modification 3, the base point 24a is arranged such that the side panel flap portion 24 begins from an end portion of this extension line RLL.

As understood from the above, it is not absolutely necessary for the side panel flap portion 24 in the present invention that the base point 24a coincides with the intersection point IP, and, as in this Modification 3, the base point 24a may be arranged close to the intersection point IP. It is to be noted that, although the longer ruled line RL₂ has the extension line RLL in Modification 3, the side panel flap portion 24 may be in a fashion in which, instead of the above-described fashion, the shorter ruled line RL₁ has the extension line RLL.

With the above-described container 130 made of the fibrous material with the curled rim according to Modification 3, it is also possible to enjoy effects similar to those indicated in the above-described embodiment.

### <Modification 4>

A container 140 made of a fibrous material with a curled rim according to Modification 4 is depicted in FIG. 12. In the above-described container 100 made of the fibrous material with the curled rim according to the embodiment, the single projecting portion PP is arranged around the center MAc on the outer-rim side end face ES₃ on the side of the one of the shorter side panel 21 and the longer side panel 22, the one side panel including the missing area MA. In the container 140 made of the fibrous material with the curled rim according to Modification 4, on the other hand, a plurality of projecting portions PP are formed on the outer-rim side end face ES₃ in the missing area MA.

Described more specifically, the projecting portions PP in Modification 4 include a first projecting portion PP1 and a second projecting portion PP2 having the same width as the first projecting portion PP1 or a smaller width than the first projecting portion PP1. The first projecting portion PP1 has the above-described width W1, and is arranged on the outer-rim side end face ES₃ around the center MAc in the missing area MA. Meanwhile, the second projecting portion PP2 has a second width W2 equal to or smaller than the first width W1, and is arranged on the outer-rim side end face ES₃ and on a side of an end portion MAe in the missing area MA with a predetermined interval separated from the first projecting portion PP1. As described above, the width W1 of the projecting portion (first projecting portion PP1) located at the center MAc in the missing area MA may be set to equal to or greater than the width W2 of the projecting portion (second projecting portion PP2) which is located on the side of the end portion MAe.

Also depicted in the figure, a plurality of second projecting portions PP2 may also be arranged on the outer-rim side end face ES₃ in the missing area MA in such a manner as to sandwich the first projecting portion PP1. If a plurality of second projecting portions PP2 are arranged, the widths W2 of the plurality of second projecting portions PP2 may be the same, or different from each other or one another.

Moreover, the single first projecting portion PP1 is depicted in the figure, but, as with the second projecting portions PP2, a plurality of first projecting portions PP1 may also be arranged on the outer-rim side end face ES₃ in the missing area MA. If a plurality of first projecting portions PP1 are arranged, the plurality of first projecting portions PP1 may have the same width or different widths from each other or one another insofar as their widths are equal to or greater than the width W2 of the second projecting portion PP2 from the viewpoint of reinforcement to the curled rim portion 30.

As described above, a plurality of projecting portions PP may intermittently be arranged from the above-described center MAc toward the end portions MAe of the missing area MA. With the above-described container 140 made of the fibrous material with the curled rim according to Modification 4, it is also possible to enjoy effects similar to those indicated in the above-described embodiment and, in addition, to further increase the strength of the curled rim portion 30 while retaining forming readiness into a curl shape.

### [Industrial Applicability]

The present invention can be used in manufacturing a bottomed container with a curled rim, the container being capable of thoroughly assuring sealing performance even if the container is made, for example, primarily of paper and its bottom surface (bottom panel) is polygonal.

### [Reference Signs List]

100 to 140: Container made of fibrous material with curled rim
10: Bottom panel
20: Side wall portion
21: Shorter side panel
22: Longer side panel
23: Corner portion
24: Side panel flap portion
30: Curled rim portion

## Claims

1. A container made of a fibrous material with a curled rim, the container being open in an upper surface thereof and curled at an opening rim thereof, comprising:
a bottom panel of a polygonal shape defined by a ruled line;
a side wall portion configured by first side panels and second side panels that are each continuous with the bottom panel via the ruled line and inclined in such a manner as to flare from the ruled line to the opening rim; and
a curled rim portion formed by an upper end of the side wall portion being rolled in a curl shape,
wherein the side wall portion has corner portions where the first side panels and the second side panels overlap at both ends thereof,
at least one of end faces of the first side panel and the second side panel that configure each corner portion is provided with a missing area, and one of the end faces of the first side panel and the second side panel forms the curled rim portion, and
one of the first side panel and the second side panel, the one panel being located on an outer side in the corner portion, is provided with a projecting portion to be included in the curled rim portion.

2. The container made of the fibrous material with the curled rim according to claim 1, wherein the projecting portion is arranged around a center in an outer-rim side end face that defines the missing area.

3. The container made of the fibrous material with the curled rim according to claim 2, wherein a plurality of the projecting portions are intermittently arranged from the center toward ends of the missing area.

4. The container made of the fibrous material with the curled rim according to claim 3, wherein a width of the projecting portion located at the center in the missing area is equal to or greater than those of the projecting portions located on sides of the ends.

5. The container made of the fibrous material with the curled rim according to any one of claims 1 to 4, wherein
the bottom panel is defined by the ruled line that is rectangular, and
the projecting portion is arranged corresponding to the corner portion located at each of four corners of the bottom panel.

6. The container made of the fibrous material with the curled rim according to any one of claims 1 to 4, wherein a height from the outer-rim side end face in the projecting portion is set to a magnitude that the projecting portion is included in the missing area.

7. The container made of the fibrous material with the curled rim according to claim 1, wherein one of the end faces of the first side panel and the second side panel is provided with the missing area, and the panel provided with the missing area is located on the outer side in the corner portion.
